# EUROPEAN PATENT SPECIFICATION

(11) **EP 2 255 337 B1**
(45) Date of publication and mention of the grant of the patent: **19.06.2019**
(21) Application number: 09717148.2
(22) Date of filing: 06.03.2009
(51) Int. Cl.: G06T 5/00, G06T 7/00

(54) **METHOD OF PROCESSING A SEQUENCE OF COLOUR IMAGES**
VERFAHREN ZUR VERARBEITUNG EINES FARBIGEN BILDES
PROCÉDÉ POUR LE TRAITEMENT D'UNE IMAGE COLORÉE

(30) Priority: 07.03.2008 EP 08152463
(43) Date of publication of application: 01.12.2010
(73) Proprietor: Nederlandse Organisatie voor toegepast- natuurwetenschappelijk onderzoek TNO, 2595 DA 's-Gravenhage (NL)
(72) Inventor: DIJK, Judith, 2497 AN Den Haag (NL)
(74) Representative: V.O.
(86) International application number: PCT/NL2009/050100
(87) International publication number: WO 2009/110797

(56) References cited:
- EP-A- 1 017 228
- EP-A- 1 370 091
- EP-A- 1 876 566
- WO-A-2005/004040
- LIM, JAE S.: "9.6 Temporal filtering for image restoration" TWO-DIMENSIONAL SIGNAL AND IMAGE PROCESSING, 1990, pages 568-570, XP002547490

## Description

### Field of the invention

The present invention relates to a method and system for processing a sequence of colour images.

### Background

Images may be stored in a computer in the form of a grid of picture elements called pixels, containing the image's colour and brightness or lightness information. Software image editors can change the pixels to enhance or upgrade the image in many ways. The pixels can be changed as a group, or individually, by the sophisticated algorithms within the image editors. Bitmap graphics editors are often used to alter photographs and other raster graphics. Image editors may feature a number of algorithms which can add or remove noise in an image. Image compression artefacts can be removed; dust and scratches can be removed and an image can be de-speckled. Noise tends to invade images when pictures are taken in low light settings.

European patent application No 1876566 discloses a method of correcting edges in an image. The method involves determining the presence of edges in a luminance part of a colour image, followed by enhancement of these edges. Chrominance components are corrected based on the corrected luminance. This is done by using a window-based chrominance operator that gives different weights to chrominance of pixel locations in the window, a difference between the corrected luminance value at the centre of the window and adjacent luminance values.

EP 1370091 discloses a similar technique, wherein edge in a luminance image are sharpened, wherein the size of the correction of the luminance is used as input for saturation correction. EP1017228 describes tone scale correction of luminance combined with a chrominance correction dependent on the luminance correction.

### Summary

One object of is to enhance the quality of a coloured image or sequence of images.

The quality of coloured image or sequence of images, either displayed by means of e.g. a computer screen or the like or by means of a paper print etc. may be improved. A further object may be to present an improvement w.r.t. colour shift which may be caused by upgrading of e.g. noisy images taken in low light settings. This may occur when the colour planes in e.g. the RGB space are upgraded separately. Colour shift may be defined here as the phenomenon that individual coloured areas in the image tend to shift or mingle during e.g. an image noise reduction process.

The present invention is based on the understanding that, where a coloured image can be seen as being build up from a grey tone image, which could be called luminance or lightness image, and one or more colour tone images, which could be called chrominance images, the grey tone image is very suitable for image upgrading by means of a process called "temporal noise reduction". In an upgraded grey-tone image that results from such an upgrading process, a set of relevant edges can be determined. Using this set of relevant edges, the remaining colour tone images can be upgraded, however, guided by the edge information as resulting from the enhanced luminance or lightness image, viz. in such a way that in the process it is prevented that the colours in the chrominance images to be upgraded will smear across those edges. In other words, a method as set forth in claim 1 is provided.

### Brief description of the drawing

These and other aspects and advantages will become apparent from a description of exemplary embodiments using the following figures, showing colour aspects in black and white.
Fig. 1 shows the grey tone version of a coloured image, constituted by black/white rated (grey tone) pixels;
Fig. 2 shows an upgraded version of the grey tone image of fig. 1;
Fig. 3 shows the relevant edges as derived from in the upgraded grey tone image shown in fig. 2;
Fig. 4 represents a first colour tone image, constituted by blue-yellow rated pixels;
Fig. 5 represents, a second colour tone image, constituted by red-green rated pixels;
Fig. 6 illustrates mapping of the edges, shown in figure 3, into the colour tone image shown in figure 4;
Fig. 7 illustrates mapping of the edges, shown in figure 3, into the colour tone image shown in figure 5;
Fig. 8 illustrates in a magnified section of figure 7, defining of processing areas at both sides of the relevant edge (without crossing the edge), which processing areas are subjected to an upgrading process, thus upgrading the relevant colour tone image.
Fig. 9a,b show image processing apparatuses.

### Detailed description of exemplary embodiments

Coloured images may be constituted by pixels having attributes w.r.t. to their luminance (lightness) and chrominance. Each pixel thus may be coded by a black/white rate (luminance value) e.g. between 0 and 256 and e.g. two chrominance values like a blue/yellow rate and a red/green rate both e.g. between 0 and 256 as well. Typical colour spaces are CIELAB, CIELUV, and CIEXYZ, where the chrominance values are a*, b* (CIELAB) u*, v* (CIELUV) and x, y (CIEXYZ) [see e.g. http://en.wikipedia.org/wiki/Lab_color_space].

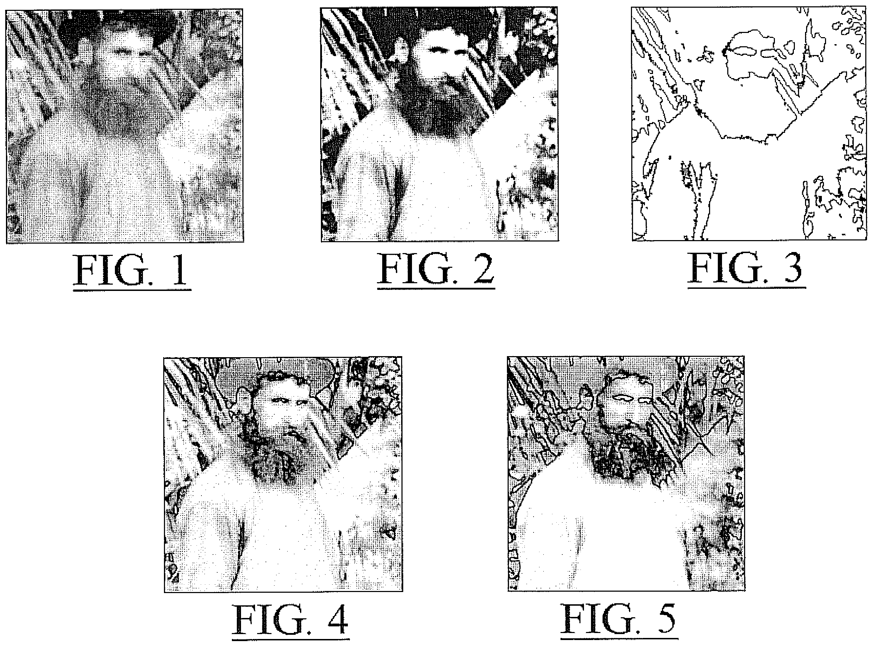

Fig. 1 shows the grey tone version of the coloured picture "Alleia Hamerops" © made by Sergei Mikhailovich. This grey tone image, sometimes called luminance or lightness image, is constituted by the grey values of the pixels.

In either way, a coloured image, comprising grey tones and colour tones, and - due to the restrictions set by the allowability regulations for patent disclosures w.r.t. their illustrations - represented by the grey tone image of figure 1, is, according to the method presented in this patent application, converted into a "normal" grey tone image (shown in figure 1) and into an upgraded grey tone image, shown in figure 2. This upgraded image, just like the grey tone image in figure 1, is constituted by black/white rated pixels or areas, representing the image's luminance or lightness values. The upgraded image, however, aims to have better quality, due to a temporal noise reduction upgrading process. A multiple-frame variant of a Super-Resolution (SR) technique may be used, which may performed to both coloured and grey tone images, are techniques that in some way enhance the resolution of an imaging system. By fusing together several low-resolution (LR) one enhanced-resolution image may be formed.

Temporal noise reduction applied to a sequence of input images means that output images are formed, wherein an output image has image values that are determined based on a combination of image values from a plurality of input images. Averaging of image values at corresponding positions in different input images may be used to reduce the noise. A noise reductor for this purpose may comprise memory for storing a plurality of the input images and an arithmetic circuit to perform the averaging. Alternatively a memory to store one or more output image may be used, temporally recursive filter operation being applied to image values at respective positions.

Based on the outcome from the upgrading (e.g. SR) process, illustrated in figure 2, the upgraded grey tone image is subjected to a process for determining, in that upgraded grey tone image, the presence and strength of relevant grey tone edges in the image. Fig. 3 illustrates the most important edges, shown as well-defined black border lines (for this example use was made of the Edge Detection function of the software package Irfanview©). For illustration purposes here only the presence, and not the strength of the edges are explicitly visualised.

Aim of the method is to upgrade coloured images. Fig. 4 represents (again, in grey tone due to the patent regulations) a first colour tone image, constituted by blue-yellow rated pixels, while Fig. 5 represents a second colour tone image, constituted by red-green rated pixels. Both colour tone images define the chrominance (colour content) of the original coloured image. Other sets of colour tone images would be possible. The colour tone image may be the original colour tone image or may be subjected to an upgrading process.

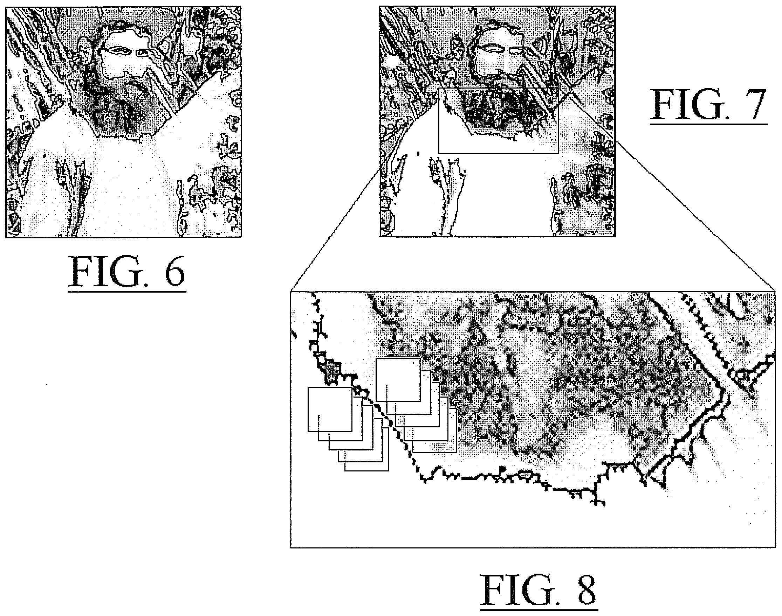

The edges, shown in figure 3, derived from the upgraded grey tone image, shown in figure 2, are mapped - by the relevant software, performing all these steps - either into the coloured image (not shown in colour, but represented by the half tone image of figure 1) or into the colour tone images, represented in the half tone images of figures 4 and 5, resulting in the images of the figures 6 and 7. Mapping involves assigning edge locations from the upgraded grey tone image to positions in the coloured image or the colour tone images. Fig. 6 thus illustrates mapping of the edges, shown in figure 3, into the colour tone image shown in figure 4, while Fig. 7 illustrates mapping of the edges, shown in figure 3, into the colour tone image shown in figure 5.

Fig. 8 illustrates a magnified section of figure 7. Moving windows are guided over the image, a technique known as convolution. The processing area is subjected to an upgrading process. The upgrading process depends on the presence and strength of edges in the current window. Upgrading algorithms can be divided by their domain: frequency or space domain. Upgrading in the space domain may be used to upgrade the colour image or the colour tone images.

In particular when a window (processing area) comprises much (chrominance) noise, e.g. due to (too) low light when the image was made (e.g. by photography or video), the quality of the image as a whole can substantially be improved by e.g. local (per processing area) filtering, performing statistical processes etc. The statistical process is steered by the presence and strength of the edges in the grey-tone image, that is, pixels that are similar to the current pixel are taken more into account than pixels that are less similar. This technique, when performed on a single image, is known as "edge-preserved filtering".

Edge-preserved filtering, also called edge preserving filtering, is known per se. Example of edge preserving filtering are anisotropic diffusion and bilateral filtering. Anisotropic diffusion is described for example by Perona, P., J. Malik, in an article titled "Scale-Space and Edge Detection Using Anisotropic Diffusion," published in the IEEE Transactions on Pattern Analysis and Machine Intelligence, vol. 12, no. 7, pp. 629-639, Jul., 1990. Bilateral filtering is described for example by Tomasi C. and R. Manduchi in an article titled "Bilateral filtering for gray and color images"published in Proc. of ICCV, 1998. In edge preserving filtering a filtered image is produced with image values at respective image positions that are a weighted average of image values in a spatial window surrounding a corresponding position in an input image. The weights in the average are steered by information that is representative the presence and strength of the edges. Image values in the window that are similar to the image value at the corresponding position are weighted more heavily than pixels that are less similar.

In conventional edge preserving filtering the weights assigned to different locations in the input image are controlled dependent on edge information obtained from the input image itself. Compared to this, in the present case, where the input image is a colour image or a colour tone image, this control is replaced by control dependent on the presence and strength of the edges in the grey-tone image. The weights applied to the colour image or the colour tone images are steered by the presence and strength of the edges in the grey-tone image. The statistical process is steered by the presence and strength of the edges in the grey-tone image, that is, pixels that are similar to the current pixel are taken more into account than pixels that are less similar. Either, both colour tone images (figures 6 and 7) or the original coloured image (after the edges being mapped in it) are processed in this way. While, as illustrated in figure 8, colour shift or mingling will substantially be reduced or even excluded by the method.

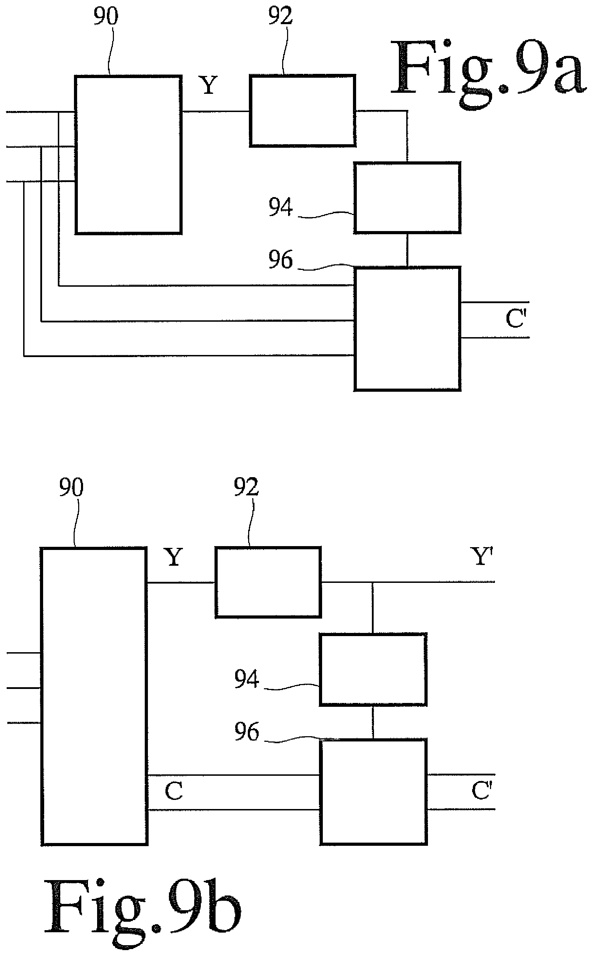

Fig. 9a shows an image processing apparatus, comprising a converter 90, a temporal noise reductor 92, and edge operator 94 and an edge preserving filter 96. Converter 90 has an input for receiving a sequence of colour images, such as a colour video signal. Converter 90 has outputs for a luminance signal Y and colour tone signals C. Temporal noise reductor 92 has an input coupled to the luminance output of converter 90 and an output coupled to an input of edge operator 94. Edge preserving filter 96 has signal inputs coupled to the colour tone signals outputs of converter 90 and a control input coupled to an output of edge operator 94.

Fig. 9b shows an image processing apparatus, wherein edge preserving filter 96 has signal inputs coupled to input of converter 90, to receive the original image signal input.

In operation converter 90 receives a sequence of images such as a video signal, for example as RGB components. From this sequence converter 90 derives luminance images Y and, in the embodiment of figure 9a, colour tone images C. If an YUV or other signal with a luminance component is input, conversion may merely involve splitting out the luminance and colour tone components. Temporal noise reductor 92 applies temporal noise reduction to the luminance images Y, which results in upgraded luminance images Y'. Edge operator 94 determines edge strength as a function of position in the image, i.e. edge presence and strength in the image or in other words the strength with which edges are present at different locations in the image. Edge operators are known per se. Edge preserving filter 96 applies edge preserving filtering to the colour tone images C under control of edge location and strengths produced by edge operator 94.

Converter 90, temporal noise reductor 92, edge operator 94 and edge preserving filter 96 may be implemented as hardware modules designed to perform their relevant functions. Alternatively, one or more of these modules may be implemented using software modules with programs of instructions for a programmable processor that performs the functions under control of the programs.

The method is especially useful when colour camera's are used in dark environments, such as special night view camera's or camera's operating in night view mode.

A method may be used for processing a coloured image or sequence of images, comprising grey tones and colour tones, the method comprising the steps of:
a. converting the coloured image into a grey tone image, based on the image's luminance or lightness values, as well as one or more colour tone images;
b. determining, in the grey tone image, the presence of relevant grey tone edges in the image;
c. mapping those determined grey tone edges into said coloured image or into said one or more colour tone images;
d. upgrading said coloured image or said one or more colour tone images using an upgrading process under control of said grey tone edges.

In a further embodiment the grey tone image, mentioned in step a., is upgraded, while step b. is performed to the upgraded version of the grey tone image.

In another embodiment step b. comprises determining, in the grey tone image, both the presence and the strength of the relevant grey tone edges, both being used to control the upgrading process in step d.

A system or software may be used which is arranged to perform the method according to one or more preceding embodiments.

## Claims

1. A computer-implemented method of processing images from a sequence of images, comprising grey tones and colour tones, the method comprising the steps of:
- obtaining grey tone images based on the image's luminance or lightness values from the images in the sequence;
- deriving a further grey tone image by applying temporal noise reduction to the grey tone images;
- determining the presence of grey tone edges in the further grey tone image, the determining of grey tone edges comprising determining, in the further grey tone image, information that is representative of both the presence and the strength of the relevant grey tone edges;
- mapping the determined grey tone edges into a coloured image from the sequence or one or more colour tone images obtained from the coloured image;
- applying local filtering under control of said grey tone edges to said coloured image or the one or more colour tone images, the local filtering comprising edge preserving filtering under control of the information that is representative of the presence and the strength of the relevant grey tone edges.

2. A method according to claim 1, wherein said obtaining comprises converting the coloured image into one of the grey tone images, as well as into the one or more colour tone images.

3. A computer program product, comprising a program of instructions that, when executed by a programmable computer, causes the computer to execute the method according to one or more of the preceding claims.

4. An image processing system comprising
- an input for receiving from a sequence of images, comprising grey tones and colour tones;
- a processing circuit configured to obtain grey tone images based on the image's luminance or lightness values from the images in the sequence of images; to derive a further grey tone image by applying temporal noise reduction to the grey tone images; to determine the presence of grey tone edges in the further grey tone image, the determining of grey tone edges comprises determining, in the further grey tone image, information that is representative of both the presence and the strength of the relevant grey tone edges; to map the determined grey tone edges into a coloured image from the sequence or one or more colour tone images derived from the coloured image; and to apply local filtering under control of said grey tone edges to said coloured image or the one or more colour tone images, the local filtering comprising edge preserving filtering under control of the information that is representative of the presence and the strength of the relevant grey tone edges.

5. An image processing system according to claim 4, wherein the image processing system comprises
- a converter (90) with an input for receiving the sequence of colour images and a first output for outputting the grey tone images and further outputs for outputting one or more colour tone images obtained from the sequence of colour images;
- a temporal noise reductor (92) for deriving said further grey tone image, the temporal noise reductor having an input coupled to the first output from the converter;
- an edge operator (94) for said determining of the presence of the grey tone edges, the edge operator having an input coupled to an output of the temporal noise reductor;
- an edge preserving filter (96) for performing said local filtering, the edge preserving filter having a signal input coupled to the further outputs for one or more colour tone images from the converter and a control input coupled to an output of the edge operator.

## Patentansprüche

1. Computerimplementiertes Verfahren zum Verarbeiten von Bildern aus einer Bildsequenz, umfassend Grautöne und Farbtöne, wobei das Verfahren die folgenden Schritte umfasst:
- Erhalten von Grautonbildern basierend auf der Luminanz oder Helligkeitswerten des Bildes aus den Bildern in der Sequenz;
- Ableiten eines weiteren Grautonbildes durch Anwenden einer zeitlichen Rauschverringerung auf die Grautonbilder;
- Bestimmen des Vorhandenseins von Grautonrändern in dem weiteren Grautonbild, wobei das Bestimmen von Grautonrändern das Bestimmen in dem weiteren Grautonbild von Informationen umfasst, die sowohl für das Vorhandensein als auch die Stärke der relevanten Grautonränder repräsentativ sind;
- Abbilden der bestimmten Grautonränder in ein Farbbild aus der Sequenz oder einem oder mehr Farbtonbildern, die aus dem Farbbild erhalten werden;
- Anwenden einer lokalen Filterung unter Steuerung der Grautonränder auf das Farbbild oder das eine oder die mehreren Farbtonbilder, wobei die lokale Filterung eine randerhaltende Filterung unter Steuerung der Informationen umfasst, die für das Vorhandensein und die Stärke der relevanten Grautonränder repräsentativ ist.

2. Verfahren nach Anspruch 1, wobei das Erhalten das Umwandeln des Farbbildes in eines der Grautonbilder sowie in das eine oder die mehreren Farbtonbilder umfasst.

3. Computerprogrammprodukt, umfassend ein Programm von Anweisungen, das, wenn es von einem programmierbaren Computer ausgeführt wird, bewirkt, dass der Computer das Verfahren nach einem oder mehr der vorhergehenden Ansprüche ausführt.

4. Ein Bildverarbeitungssystem, umfassend:
- einen Eingang zum Empfangen aus einer Bildsequenz, der Grautöne und Farbtöne umfasst;
- eine Verarbeitungsschaltung, die dafür konfiguriert ist, um Grautonbilder auf der Basis der Luminanz- oder Helligkeitswerte des Bildes aus den Bildern in der Bildsequenz zu erhalten; um ein weiteres Grautonbild durch Anwenden einer zeitlichen Rauschverringerung auf die Grautonbilder abzuleiten; um das Vorhandensein von Grautonrändern in dem weiteren Grautonbild zu bestimmen, wobei das Bestimmen von Grautonrändern das Bestimmen in dem weiteren Grautonbild von Informationen umfasst, die sowohl für das Vorhandensein als auch für die Stärke der relevanten Grautonränder repräsentativ sind; um die bestimmten Grautonränder in ein Farbbild aus der Sequenz oder ein oder mehrere Farbtonbilder, die aus dem Farbbild abgeleitet sind, abzubilden; und um eine lokale Filterung unter Steuerung der Grautonränder auf das Farbbild oder das eine oder die mehreren Farbtonbilder anzuwenden, wobei die lokale Filterung eine randerhaltende Filterung unter Steuerung der Informationen umfasst, die für das Vorhandensein und die Stärke der relevanten Grautonränder repräsentativ sind.

5. Bildverarbeitungssystem nach Anspruch 4, wobei das Bildverarbeitungssystem Folgendes umfasst
- einen Konverter (90) mit einem Eingang zum Empfangen der Sequenz von Farbbildern und einem ersten Ausgang zum Ausgeben der Grautonbilder und weiteren Ausgängen zum Ausgeben eines oder mehrerer Farbtonbilder, die aus der Sequenz von Farbbildern erhalten werden;
- einen zeitlichen Rauschdämpfer (92) zum Ableiten des weiteren Grautonbildes, wobei der zeitliche Rauschdämpfer einen Eingang aufweist, der mit dem ersten Ausgang des Konverters gekoppelt ist;
- einen Randoperator (94) zum Bestimmen des Vorhandenseins der Grautonränder, wobei der Randoperator einen Eingang hat, der mit einem Ausgang des zeitlichen Rauschdämpfers gekoppelt ist;
- einen randerhaltenden Filter (96) zum Durchführen der lokalen Filterung, wobei der randerhaltende Filter einen mit den weiteren Ausgängen gekoppelten Signaleingang für ein oder mehr Farbtonbilder von dem Konverter und einen an einem Ausgang des Randoperators gekoppelten Steuereingang aufweist.

## Revendications

1. Méthode implémentée par ordinateur pour traiter des images parmi une séquence d'images, comprenant des nuances de gris et des nuances de couleur, la méthode comprenant les étapes consistant à :
- obtenir des images de nuances de gris basées sur des valeurs de luminance ou de luminosité de l'image parmi les images de la séquence ;
- dériver une autre image de nuances de gris en appliquant une réduction de bruit temporel aux images nuances de gris ;
- déterminer la présence de bords de nuances de gris dans l'autre image de nuances de gris, la détermination de bords de nuances de gris comprenant la détermination, dans l'autre image de nuances de gris, d'informations qui sont représentatives à la fois de la présence et de la force des bords de nuances de gris pertinents ;
- mapper les bords de nuances de gris déterminés dans une image colorée de la séquence ou une ou plusieurs images de nuances de couleur obtenues à partir de l'image colorée ;
- appliquer un filtrage local sous commande desdits bords de nuances de gris à ladite image colorée ou les une ou plusieurs images de nuances de couleur, le filtrage local comprenant un filtrage de préservation de bords sous commande des informations qui sont représentatives de la présence et de la force des bords de nuances de gris pertinents.

2. Méthode selon la revendication 1, dans laquelle ladite obtention comprend la conversion de l'image colorée en l'une des images de nuances de gris, ainsi qu'en l'une ou plusieurs images nuances de couleur.

3. Produit de programme informatique comprenant un programme d'instructions qui, lorsqu'il est exécuté par un ordinateur programmable, amène l'ordinateur à exécuter la méthode selon l'une ou plusieurs des revendications précédentes.

4. Système de traitement d'images comprenant
- une entrée destinée à recevoir une séquence d'images, comprenant des nuances de gris et des nuances de couleur ;
- un circuit de traitement configuré pour obtenir des images de nuances de gris sur la base des valeurs de luminance ou de luminosité de l'image parmi les images de la séquence d'images ; dériver une autre image de nuances de gris en appliquant une réduction de bruit temporel aux images de nuances de gris ; déterminer la présence de bords de nuances de gris dans l'autre image de nuances de gris, la détermination de bords de nuances de gris comprend la détermination, dans l'autre image de nuances de gris, d'informations qui sont représentatives à la fois de la présence et de la force des bords de nuances de gris pertinents ; mapper les bords de nuances de gris déterminés dans une image colorée de la séquence ou une ou plusieurs images de nuances de couleur dérivées de l'image colorée ; et appliquer un filtrage local sous commande desdits bords de nuances de gris à ladite image colorée ou l'un ou plusieurs images de nuances de couleur, le filtrage local comprenant un filtrage de préservation de bords sous commande des informations qui sont représentatives de la présence et de la force des bords de nuances de gris pertinents.

5. Système de traitement d'images selon la revendication 4, dans lequel le système de traitement d'images comprend
- un convertisseur (90) ayant une entrée pour recevoir la séquence d'images en couleurs et une première sortie pour délivrer en sortie les images de nuances de gris et d'autres sorties pour délivrer en sortie une ou plusieurs images de nuances de couleur obtenues à partir de la séquence d'images en couleurs ;
- un réducteur de bruit temporel (92) pour dériver ladite autre image de nuances de gris, le réducteur de bruit temporel ayant une entrée couplée à la première sortie du convertisseur ;
- un opérateur de bords (94) pour ladite détermination de la présence des bords de nuances de gris, l'opérateur de bords ayant une entrée couplée à une sortie du réducteur de bruit temporel ;
- un filtre de préservation de bords (96) pour effectuer ledit filtrage local, le filtre de préservation de bords ayant une entrée de signal couplée aux autres sorties pour les une ou plusieurs images de nuances de couleur provenant du convertisseur et une entrée de commande couplée à une sortie de l'opérateur de bords.
